# EUROPÄISCHE PATENTSCHRIFT

(11) **EP 3 198 826 B1**
(45) Veröffentlichungstag und Bekanntmachung des Hinweises auf die Patenterteilung: **03.07.2019**
(21) Anmeldenummer: 15766804.7
(22) Anmeldetag: 17.09.2015
(51) Int. Cl.: H04L 29/06, H04W 12/06

(54) **AUTHENTISIERUNGS-STICK**
AUTHENTICATION STICK
CLÉ D'AUTHENTIFICATION

(30) Priorität: 24.09.2014 DE 102014219297
(43) Veröffentlichungstag der Anmeldung: 02.08.2017
(73) Patentinhaber: Fraunhofer-Gesellschaft zur Förderung der angewandten Forschung e.V., 80686 München (DE)
(72) Erfinder: KREMPEL, Erik, 76137 Karlsruhe (DE); KAUFMANN, Mario, 76135 Karlsruhe (DE)
(74) Vertreter: Schenk, Markus
(86) Internationale Anmeldenummer: PCT/EP2015/071364
(87) Internationale Veröffentlichungsnummer: WO 2016/046063

(56) Entgegenhaltungen:
- WO-A1-2013/123453
- GB-A- 2 496 354
- US-A1- 2005 149 745
- Joel Lee: "3 Tools For Turning Your USB Drive Into A Secure Unlock Key For Your PC", , 16. September 2014 (2014-09-16), XP055231964, Gefunden im Internet: URL:http://www.makeuseof.com/tag/3-tools-t urning-usb-drive-secure-unlock-key-pc/ [gefunden am 2015-11-27]
- Anonymous: "Rohos > Rohos Logon Key", , 3. August 2014 (2014-08-03), XP055231990, Gefunden im Internet: URL:https://web.archive.org/web/2014080301 4541/http://www.rohos.com/products/rohos-l ogon-key/ [gefunden am 2015-11-27]
- "The YubiKey Manual Version: 3.3", , 17. September 2014 (2014-09-17), XP055231994, Gefunden im Internet: URL:https://web.archive.org/web/2014101923 1331/https://www.yubico.com/wp-content/upl oads/2014/10/YubiKey-Manual-v3.3.pdf [gefunden am 2015-11-27]

## Beschreibung

Ausführungsbeispiele der vorliegenden Erfindung beziehen sich auf einen Kommunikationsadapter zur Authentisierung eines Benutzers. Weitere Ausführungsbeispiele beziehen sich auf ein System zur Authentisierung, sowie ein Verfahren zur Authentisierung eines Benutzers.

Zur Authentisierung werden in der Informationstechnik häufig Passwörter verwendet. Menschen können sich sichere Passwörter nur schwer merken. Nach einer Empfehlung des Bundesamts für Sicherheit in der Informationstechnologie (BSI) sollten Passwörter mindestens 8 Zeichen lang sein und neben Buchstaben auch Zahlen und Sonderzeichen beinhalten (siehe z. B. die Referenz [1]). Weiter sollte man für jede Anwendung eigene Passwörter anlegen. Das bedeutet, dass der Anwender sich eine große Liste langer und komplexer Passwörter merken muss. Darüber hinaus ist das Eingeben dieser Passwörter an einem Endgerät mit Hilfe einer Tastatur sehr unkomfortabel und fehleranfällig.

Bei Passwort-Managern (verbreitete Systeme sind z.B. in den Referenzen [2], [3], [4] und [5] gezeigt) handelt es sich um Software, welche das Verwalten von vielen Passwörtern ermöglicht. Mit dieser können automatisch sichere Passwörter erzeugt und gespeichert werden. Ist ein Passwort-Manager auf einem PC installiert, kann das Passwort in die Zwischenablage kopiert und dann in den Passwortdialog eingefügt werden. Diese Lösung hat beispielsweise den Nachteil, dass der Benutzer bereits an einem PC angemeldet sein muss, um auf seinen Passwort-Manager zuzugreifen. So kann zum Beispiel eine Anmeldung am Betriebssystem nicht mit Hilfe eines Passwort-Managers vorgenommen werden. Der Passwort-Manager muss zur Benutzung installiert werden. Dies kann z.B. bei Arbeitsplatzrechnern oder Internetcafes verboten sein. Ferner muss dem Gerät, auf dem der Passwort-Manager installiert wird, vertraut werden. Dies ist besonders bei fremden Geräten kritisch. Außerdem muss der Anwender, wenn er den Passwort-Manager auf unterschiedlichen Geräten verwendet, die Liste der Passwörter zwischen allen Geräten synchronisieren.

Weiter kann es zu Situationen kommen, in denen der Dialog zur Passworteingabe nicht auf dem gleichen Gerät angezeigt wird, auf dem der Passwort-Manager installiert ist. Dies kann sein, wenn eine Person sehr viele Geräte verwaltet und nicht überall den Passwort-Manager installieren will, oder wenn es sich um eine Anmeldung an einem fremden Gerät handelt. Um sich hier mit einem im Passwort-Manager gespeicherten Passwort anzumelden, muss der Benutzer sich an einem anderen Gerät das Passwort anzeigen lassen und danach das Passwort manuell in den Passwortdialog eintippen. Das ist nicht nur sehr unkomfortabel, sondern stellt auch eine beträchtliche Sicherheitslücke dar, da andere Personen das Passwort sehen können.

Eine weitere Möglichkeit, um zu verhindern, dass Passwörter vor der Eingabe an einem Gerät in Klartext angezeigt werden, sind Paare aus mobilem Endgerät (beispielsweise einem Smartphone) und einer Software, die auf dem Gerät läuft, auf dem sich ein Benutzer anmelden will (siehe z.B. die Referenz [6]). Wenn ein Passwort benötigt wird, fordert der Nutzer sein mobiles Endgerät auf, das Passwort an die dafür installierte Software zu übertragen. Diese empfängt die Daten und gibt sie an den Dialog zur Anmeldung weiter. Damit wird verhindert, dass das Passwort auf einem Bildschirm angezeigt wird. Auch diese Möglichkeit hat beträchtliche Nachteile, so muss die entsprechende Software auf allen Geräten installiert werden, an denen sich ein Nutzer anmelden will. Ferner muss der Benutzer bereits an einem PC angemeldet sein, um auf seine gespeicherten Passwörter zugreifen zu können. Weiter muss für jedes Gerät, an dem das System angewendet werden soll, eine Kopplung zwischen dem mobilen Endgerät und dem Gerät, welches zur Anmeldung auffordert, durchgeführt werden.

Eine weitere aktuell bekannte Möglichkeit sieht den Einsatz von Spezialhardware vor (siehe z.B. die Referenz [7]). Dabei werden auf einem Gerät, ähnlich einem USB-Stick, Anmeldedaten, d.h. Paare von Benutzernamen und Passwort gespeichert. Wenn ein Nutzer ein Passwort benötigt, authentifiziert er sich an der Spezialhardware und kann am Display den Benutzernamen und das Passwort ablesen. Diese Möglichkeit hat jedoch die Nachteile, dass das Passwort im Klartext angezeigt wird und am Gerät von Hand eingegeben werden muss. Die Spezialhardware mit Display ist teuer und muss überall mitgenommen werden.

Ferner ist ein Eingabe-Stick (InputStick, siehe z.B. die Referenz [8]) bekannt, welcher viele der bekannten Probleme löst. Der InputStick kann sich gegenüber einem PC als Standardtastatur ausgeben. Mit einer geeigneten Anwendung auf einem Smartphone können Passwörter verwaltet, ausgewählt und dann an einen PC gesendet werden. Für den PC sieht diese Übertragung so aus, als ob das Passwort von einer handelsüblichen Tastatur geschickt wird. Es ist also keine Installation von Software auf dem PC notwendig. Diese Lösung hat aber den Nachteil, dass die Passwörter auf dem Handy gespeichert sind. Auch wenn Sicherheitsmechanismen eingesetzt werden, beispielsweise indem die Datenbank der Passwörter verschlüsselt wird, ist dies ein beträchtliches Sicherheitsproblem. Da selbst verschlüsselt gespeicherte Passwörter vor dem Senden an den InputStick entschlüsselt werden müssen, besteht die Gefahr, dass ein Angreifer diese Passwörter extrahieren kann. Mit dem beobachteten Trend, dass die Anzahl der Angriffe auf mobile Plattformen stetig steigt, stellt dies ein beträchtliches Sicherheitsproblem dar.

Der vorliegenden Erfindung liegt somit die Aufgabe zugrunde, ein Konzept zur einfachen und sicheren Aufbewahrung von Anmeldedaten wie Benutzername und Passwort bereitzustellen und gleichzeitig die Eingabe der Anmeldedaten bei einem Endgerät zu erleichtern.

Diese Aufgabe wird durch eine Vorrichtung nach Anspruch 1, ein Verfahren nach Anspruch 15 und ein Computerprogramm gemäß Anspruch 16 gelöst.

Ausführungsbeispiele der vorliegenden Erfindung schaffen einen Kommunikationsadapter zur Authentisierung eines Benutzers. Der Kommunikationsadapter umfasst dabei eine Empfangseinheit zum Empfangen von verschlüsselten Anmeldedaten, eine Entschlüsselungseinheit zum Entschlüsseln der verschlüsselten Anmeldedaten und eine Ausgabeeinheit zum Ausgeben der entschlüsselten Anmeldedaten an ein Endgerät.

Kernstück der Erfindung ist der Kommunikationsadapter, welcher die Möglichkeit bietet, Benutzernamen, Passwörter oder andere digitale Informationen, beispielsweise von einem mobilen Endgerät beziehungsweise einem mobilen Eingabegerät an ein Endgerät oder ein anderes Gerät zu übertragen. Dabei werden auf dem mobilen Eingabegerät nicht die entschlüsselten Anmeldedaten (Passwörter), sondern lediglich besonders verschlüsselte Anmeldedaten beziehungsweise verschlüsselte Daten gespeichert. Selbst wenn das mobile Eingabegerät verloren geht oder alle gespeicherten Anmeldedaten gestohlen werden, sind diese für einen Angreifer nutzlos. Nur aus der Kombination der verschlüsselten Anmeldedaten (die auf dem mobilen Eingabegerät gespeichert sind) und dem Kommunikationsadapter des Benutzers lassen sich die entschlüsselten Anmeldedaten beziehungsweise die richtigen Passwörter berechnen. Dabei kann nicht ein beliebiger, sondern nur genau der zum Benutzer gehörende Kommunikationsadapter verwendet werden.

Bei einer bevorzugten Ausgestaltung kann die Ausgabeeinheit mit einer Schnittstelle an dem Endgerät verbunden werden, wobei die Schnittstelle an dem Endgerät zur Eingabe von Tastatursignalen geeignet. Durch eine Schnittstelle an einem Endgerät, die zur Eingabe von Tastatursignalen geeignet ist und mit der Ausgabeeinheit des Kommunikationsadapters verbindbar ist, kann die Ausgabeeinheit des Kommunikationsadapters die Eingabe der entschlüsselten Anmeldedaten beispielsweise eines Passwortes, durch einen Benutzer an dem Eingabegerät, simulieren.

Bei einer weiteren bevorzugten Ausgestaltung ist die Ausgabeeinheit ausgebildet, die Anmeldedaten in einem Format einer Standardtastatur auszugeben. Durch die Ausgabe der Anmeldedaten im Format einer Standardtastatur kann der Kommunikationsadapter an einem für die Tastatureingabe vorgesehenen Anschluss des Endgeräts angeschlossen werden, wobei das Endgerät die von der Ausgabeeinheit des Kommunikationsadapters erzeugten Tastatursignale empfängt.

Bei einer besonders bevorzugten Ausgestaltung ist die Empfangseinheit ausgebildet, die verschlüsselten Anmeldedaten von einem mobilen Eingabegerät zu empfangen. Ein mobiles Eingabegerät ist meist ein Gerät, das der Benutzer häufig mit sich führt, wodurch sich das mobile Eingabegerät im persönlichen Zugriffsbereich des Benutzers befindet.

Bei einer bevorzugten Ausgestaltung umfassen die entschlüsselten Anmeldedaten ein erstes Passwort bzw. ist die Entschlüsselungseinheit ausgebildet, die verschlüsselten Anmeldedaten mit einem zweiten Passwort zu entschlüsseln. Zur Authentisierung bei Zugriffs- oder Zutrittsrechten auf bestimmte Daten, Programme, Dokumente oder Bereiche, werden meist Passwörter verwendet. Es können aber auch beispielsweise biometrische Daten wie Fingerabdrücke oder Iris-Scans als Anmeldedaten genutzt werden. Ferner ist es beispielsweise möglich, mit einem langlebigen Geheimnis, beispielsweise einem Satz, die Anmeldedaten zu verschlüsseln.

Bei einer bevorzugten Ausgestaltung ist der Kommunikationsadapter ausgebildet, das zweite Passwort in einem Speicher zu speichern. Das zweite Passwort kann in einem Speicher beispielsweise im Kommunikationsadapter abgelegt sein, um bei Bedarf an die Entschlüsselungseinheit weitergeleitet zu werden. Das zweite Passwort kann aber auch über eine zusätzliche Eingabeeinheit von dem Kommunikationsadapter empfangen werden, oder von dem Endgerät an den Kommunikationsadapter ausgegeben werden.

Bei einer weiteren bevorzugten Ausgestaltung sind eine Mehrzahl von zweiten Passwörtern in dem Kommunikationsadapter gespeichert und das zweite Passwort ist abhängig von einer Anwendung, bei welcher sich der Benutzer authentisiert. Durch eine Mehrzahl von gespeicherten zweiten Passwörtern in dem Kommunikationsadapter kann abhängig von der Anwendung, bei der der Benutzer sich authentisiert ein bestimmtes zweites Passwort verwendet werden. Somit wird der Schutz vor unberechtigtem Zugriff erhöht, da jede Anwendung ein eigenes, zweites Passwort benötigt.

Bei einer besonders bevorzugten Ausgestaltung ist das zweite Passwort von einem Benutzer, welcher sich authentisieren will, abhängig. Durch ein zweites Passwort, welches vom Benutzer abhängig ist, wird ebenfalls der Schutz vor unberechtigtem Zugriff erhöht. Außerdem ist es durch unterschiedliche zweite Passwörter für keinen Benutzer möglich, aufgrund seiner mit dem zweiten Passwort verschlüsselten Anmeldedaten, Rückschlüsse auf die Anmeldedaten der anderen Benutzer zu ziehen. Der Kommunikationsadapter kann dadurch von mehrere Benutzer genutzt werden.

Bei einer weiteren bevorzugten Ausgestaltung ist der Kommunikationsadapter ausgebildet, das zweite Passwort automatisiert zu generieren. Durch automatisiert generierte Passwörter können Passwörter generiert werden, welche keinen Bezug zum Benutzer aufweisen und somit für Dritte schwieriger zu erraten sind. Außerdem können automatisch generierte Passwörter eine beliebige Länge aufweisen.

Bei einem Ausführungsbeispiel umfasst ein System zur Authentisierung eines Benutzers an einem Endgerät, einen Kommunikationsadapter und ein mobiles Eingabegerät, das ausgebildet ist, verschlüsselte Anmeldedaten von einem Benutzer zu speichern und an die Empfangseinheit des Kommunikationsadapters auszugeben und ein Endgerät, welches ausgebildet ist, die entschlüsselten Anmeldedaten von der Ausgabeeinheit zu empfangen. Mobile Eingabegeräte eignen sich besonders zum Speichern der verschlüsselten Anmeldedaten, da sie oftmals lediglich von einem Benutzer genutzt werden. Sie stellen somit einen persönlichen Gebrauchsgegenstand dar, welchen der Benutzer häufig mit sich trägt und somit jederzeit für den Benutzer verfügbar ist. Mobile Eingabegeräte verfügen zudem nebst einem genügend großen Speicher oftmals auch über verschiedene Kommunikationsschnittstellen, mit welchen sie Daten mit anderen Geräten austauschen können.

Bei einer bevorzugten Ausgestaltung ist das mobile Eingabegerät ausgebildet, die verschlüsselten Anmeldedaten über eine Funkverbindung an die Empfangseinheit auszugeben. Durch eine Funkverbindung können Daten von einem mobilen Eingabegerät ohne zusätzlichen Hardwarebedarf, wie beispielsweise ein Kabel, an den Kommunikationsadapter übertragen werden.

Bei einer besonders bevorzugten Ausgestaltung ist das mobile Eingabegerät ausgebildet, um automatisiert erste Passwörter oder zweite Passwörter zu generieren. Auf dem mobilen Eingabegerät können mit vergleichsweise geringem Aufwand durch eine entsprechende Software Passwörter generiert werden, welche die vorgängig beschriebenen Vorteile automatisiert generierter Passwörter aufweisen (Länge, kein Bezug zu Benutzer).

Des Weiteren wird ein Verfahren zur Authentisierung eines Benutzers bereitgestellt, welches folgende Schritte umfasst:
- Empfangen von verschlüsselten Anmeldedaten.
- Entschlüsseln der verschlüsselten Anmeldedaten.
- Ausgeben der entschlüsselten Anmeldedaten an ein Endgerät.

Ferner wird ein Computerprogramm mit einem Programmcode zur Durchführung gemäß des oben beschriebenen Verfahrens bereitgestellt, wenn das Computerprogramm auf einem Computer oder Prozessor abläuft.

Ausführungsbeispiele der vorliegenden Erfindung werden Bezug nehmend auf die beiliegenden Figuren näher erläutert. Es zeigen:
- Fig. 1: eine schematische Darstellung eines Ausführungsbeispiels eines Kommunikationsadapters;
- Fig. 2: eine schematische Darstellung eines Systems zur Authentisierung eines Benutzers an einem Endgerät;
- Fig. 3: ein Ausführungsbeispiel eines Kommunikationsadapters;
- Fig. 4: eine Eingabemaske für Zugangsdaten auf einem Endgerät.

In der nachfolgenden Beschreibung der Ausführungsbeispiele der Erfindung werden in den Figuren gleiche oder gleichwertige Elemente mit den gleichen Bezugszeichen versehen, so dass deren Beschreibung in den unterschiedlichen Ausführungsbeispielen austauschbar ist.

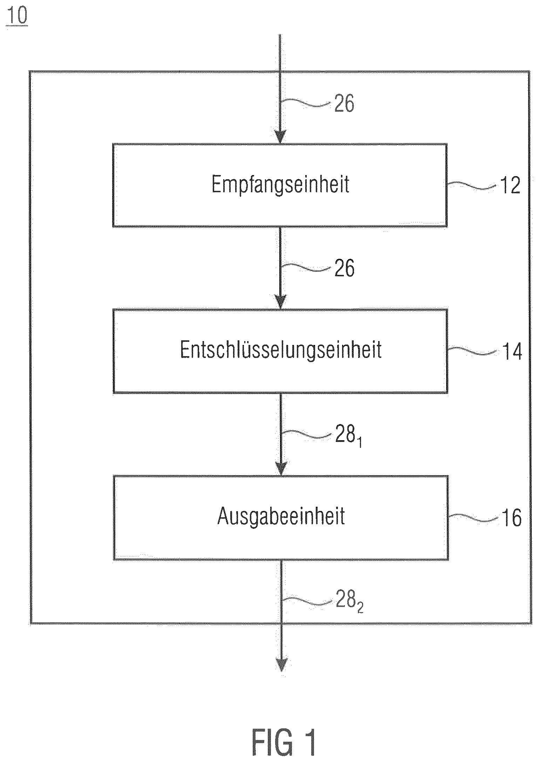

Figur 1 zeigt eine schematische Darstellung eines Ausführungsbeispiels eines Kommunikationsadapters 10 zur Authentisierung eines Benutzers. Als Authentisierung kann ein Beitrag eines Benutzers verstanden werden, um mit diesem Beitrag den Nachweis einer behaupteten Eigenschaft einer Entität zu erbringen. Anschließend wird beispielsweise von einem Server mittels Authentifizierung die Authentisierung bestätigt. Der Benutzer oder Anwender kann eine Person oder eine Gruppe von Personen sein. Es kann aber auch ein Gerät oder ein Apparat durch den Kommunikationsadapter 10 authentifiziert werden. Durch die Authentifizierung werden im Anschluss dem Benutzer Anwendungen ermöglicht, das heißt beispielsweise Zugriffs- oder Zutrittsrechte auf bestimmte Daten, Programme, Dokumente oder Bereiche erteilt.

Der Kommunikationsadapter 10 umfasst eine Empfangseinheit 12 zum Empfangen von verschlüsselten Anmeldedaten 26. Anmeldedaten umfassen gewöhnlich eine Identität, wie beispielsweise einen Benutzernamen oder einen Kontonamen sowie ein Passwort mit dem die Identität geprüft wird. Passwörter sind eine vereinbarte Zeichenfolge durch welche sich eine Identität bestätigen lässt. Ferner können verschlüsselte Anmeldedaten 26 digitale Schlüssel oder Zertifikate umfassen.

Die Empfangseinheit 12 umfasst eine Schnittstelle des Kommunikationsadapters 10. Die verschlüsselten Anmeldedaten 26 können als Bitstrom von der Empfangseinheit 12 empfangen werden. Der Bitstrom kann eine Zeichenkodierung wie beispielsweise einen ASCII-Code aufweisen, um einen Zeichensatz auf die Empfangseinheit 12 zu übertragen. Die Übertragung des Bitstroms kann leitungsgebunden, beispielsweise über ein elektrisches Kabel oder einen Lichtwellenleiter, erfolgen. Vorzugsweise erfolgt die Übertragung der verschlüsselten Anmeldedaten 26 zu der Empfangseinheit 12, über eine Luftstrecke, beispielsweise mithilfe eines Funksignals oder einer Infrarot-Datenübertragung. Die Übertragung über eine Luftstrecke hat den Vorteil, dass an einem Gehäuse des Kommunikationsadapters 10 keine zusätzlichen Öffnungen, an welchen Feuchtigkeit bzw. Schmutz eindringen kann, vorgesehen werden müssen. Außerdem besteht bei Kabelverbindungen die Gefahr von mechanisch unzureichenden, elektrischen Verbindungen, wodurch elektrische Signale unzureichend übertragen werden. Ferner benötigt eine Funkverbindung keine zusätzliche Hardware, wie bspw. ein passendes Kabel mit Steckern.

Bei einer Übertragung der verschlüsselten Anmeldedaten 26 mit Hilfe eines Funksignals, kann die Empfangseinheit 12 einen Sender und einen Empfänger für das Funksignal umfassen. Die Übertragung der verschlüsselten Anmeldedaten 26 erfolgt beispielsweise mit geeigneten Mitteln für die Datenübertragung zwischen Geräten über kurze Distanz per Funk oder Infrarottechnik. Gemäß Ausführungsbeispielen erfolgt eine Übertragung der verschlüsselten Anmeldedaten 26 über ein WPAN (Wireless Personal Area Network, drahtloses lokales Netzwerk). Beispiele für ein WPAN sind Bluetooth, ZigBee oder FIR-IrDA.

Der Kommunikationsadapter 10 weist ferner eine Entschlüsselungseinheit 14 zum Entschlüsseln der verschlüsselten Anmeldedaten 26 auf. Die Entschlüsselungseinheit 14 umfasst beispielsweise einen Prozessor, welcher die verschlüsselten Anmeldedaten 26 entschlüsselt.

Gemäß Ausführungsbeispielen umfassen die entschlüsselten Anmeldedaten 28₁ ein erstes Passwort, einen Benutzernamen, digitale Schlüssel oder Zertifikate. Die Entschlüsselungseinheit 14 ist ausgebildet, die verschlüsselten Anmeldedaten 26 mit dem zweiten Passwort zu entschlüsseln. Passwörter werden zur Authentifizierung von Personen oder Geräten häufig eingesetzt. Dabei können nach der Authentifizierung bestimmte Daten, Programme, Dokumente, Zugriffe oder Zutritte an die authentisierte Person freigegeben werden. Es können anstelle oder ergänzend zu einem Passwort beispielsweise auch biometrische Daten wie Fingerabdrücke oder Iris-Scans als erstes oder zweites Passwort verwendet werden. Ferner ist es beispielsweise möglich, ein langlebiges Geheimnis wie beispielsweise "Name des ersten Haustieres" oder "Geburtsdatum der Mutter" oder ganze Sätze oder Akronyme als erstes oder als zweites Passwort zu verwenden.

Der Kommunikationsadapter 10 kann ausgebildet sein, das zweite Passwort in einem Speicher zu speichern. Das zweite Passwort wird von dem Speicher an den Prozessor, welcher die verschlüsselten Anmeldedaten 26 entschlüsselt, zum Entschlüsseln der verschlüsselten Anmeldedaten 26 weitergeleitet. Gemäß Ausführungsbeispielen ist der Kommunikationsadapter 10 ausgebildet, das zweite Passwort über eine zusätzliche Eingabeeinheit zu empfangen. Eine zusätzliche Eingabeeinheit kann beispielsweise eine Tastatur oder ein Tastenfeld zur Eingabe des zweiten Passworts sein. Die zusätzliche Eingabeeinheit kann über eine zusätzliche Schnittstelle mit dem Kommunikationsadapter 10 verbunden werden. Als zusätzliche Schnittstellen können ebenfalls die vorgängig bei der Empfangseinheit 12 beschriebenen Schnittstellen verwendet werden. So kann über eine zusätzlich mit Bluetooth verbundenen Tastatur das zweite Passwort an die Entschlüsselungseinheit 14 eingegeben werden. Dies hat den Vorteil, dass das zweite Passwort nicht im Kommunikationsadapter 10 gespeichert ist und somit nicht bspw. bei Diebstahl des Kommunikationsadapters 10 von Unbefugten bzw. Angreifern ausgelesen werden kann.

Gemäß Ausführungsbeispielen ist das zweite Passwort abhängig von einer Anwendung, bei welcher sich der Benutzer authentisiert. Durch verschiedene zweite Passwörter für verschiedene Anwendungen kann verhindert werden, dass bei Bekanntwerden von entschlüsselten Anmeldedaten 28₁ das zweite Passwort eruiert werden kann und in der Folge verschlüsselte Anmeldedaten 26 von weiteren Anwendungen durch Unbefugte entschlüsselt werden können. Dabei können verschiedene zweite Passwörter sowohl im Kommunikationsadapter 10 gespeichert sein oder über die zusätzliche Schnittstelle eingegeben werden.

Das zweite Passwort kann auch von einem Benutzer, der sich authentisieren will, abhängig sein. Durch ein zweites Passwort, das vom Benutzer abhängig ist, wird ebenfalls der Schutz vor unberechtigtem Zugriff erhöht. Durch unterschiedliche zweite Passwörter ist es für keinen der Benutzer möglich, die verschlüsselten Anmeldedaten 26 anderer Benutzer mit dem eigenen, zweiten Passwort zu entschlüsseln und somit die Anmeldedaten anderer Benutzer zu erhalten.

Der Kommunikationsadapter 10 kann ausgebildet sein, das zweite Passwort automatisiert zu generieren. Beispielsweise durch eine Software kann mithilfe eines Zufallsgenerators automatisiert ein Passwort generiert werden. Automatisiert generierte Passwörter haben den Vorteil, dass sie, insbesondere gegenüber langlebigen Geheimnissen, keinen Bezug zum Benutzer aufweisen und somit auch für einen gut informierten Angreifer schwierig zu erraten sind. Zusätzlich ist es bei automatisch generierten Passwörtern möglich, lange Passwörter mit vorzugsweise mehr als 64 Zeichen, besonders bevorzugt mehr als 256 Zeichen zu generieren, welche ansonsten von einem Benutzer umständlich über die Tastatureingabe generiert werden müssten.

Der Kommunikationsadapter 10 umfasst ferner eine Ausgabeeinheit 16 zum Ausgeben der entschlüsselten Anmeldedaten 28₂ an ein Endgerät. Als Endgerät wird ein Gerät bezeichnet, an welchem die entschlüsselten Anmeldedaten 28₂ eingegeben werden sollen. Ein Endgerät kann beispielsweise ein Computer oder ein Server sein.

Bei Ausführungsbeispielen des Kommunikationsadapters 10 ist die Ausgabeeinheit 16 mit einer Schnittstelle ausgebildet, welche zur Ausgabe von Tastatursignalen geeignet ist, wobei die Schnittstelle mit einer Schnittstelle des Endgerätes, welche zur Eingabe von Tastatursignalen geeignet ist, verbunden werden kann. Schnittstellen, die zur Eingabe von Tastatursignalen geeignet sind, sind beispielsweise PS/2-Schnittstellen oder USB-Schnittstellen. Gemäß Ausführungsbeispielen ist die Ausgabeeinheit 16 ausgebildet, die Anmeldedaten in einem Format einer Standardtastatur auszugeben. Durch die Ausgabe der Anmeldedaten im Format einer Standardtastatur kann der Kommunikationsadapter 10 an einem für die Tastatureingabe vorgesehenen Anschluss des Endgeräts angeschlossen werden. Über die Schnittstelle an dem Endgerät, welche zur Eingabe von Tastatursignalen geeignet ist, kann die Ausgabeeinheit 16 des Kommunikationsadapters 10 die Eingabe der entschlüsselten Anmeldedaten 28₂, beispielsweise eines Passwortes, durch einen Benutzer an dem mobilen Eingabegerät, simulieren.

Gemäß Ausführungsbeispielen ist der Kommunikationsadapter 10 ausgebildet, das zweite Passwort von dem Endgerät empfangen. Die Schnittstelle der Ausgabeeinheit 16 des Kommunikationsadapters 10 ist bei Ausführungsbeispielen nicht nur zum Senden von Daten sondern auch zum Empfangen von Daten ausgebildet. Der Empfang des zweiten Passworts von dem Endgerät durch den Kommunikationsadapter 10 hat ebenfalls den Vorteil, dass das zweite Passwort nicht in dem Kommunikationsadapter 10 gespeichert ist und somit durch Unbefugte beim Entwenden des Kommunikationsadapters 10 nicht ausgelesen werden kann.

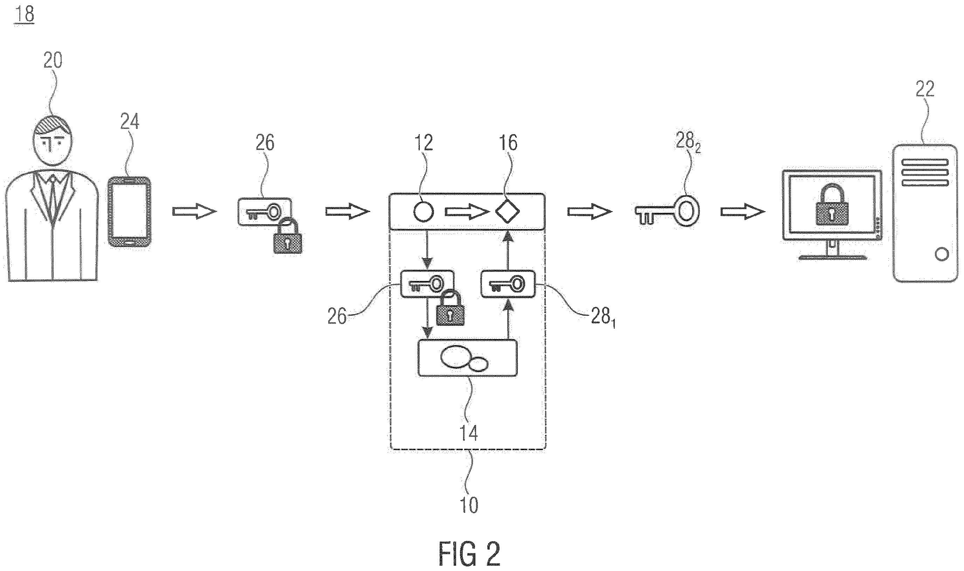

Figur 2 zeigt ein Ausführungsbeispiel eines Systems 18 zur Authentisierung eines Benutzers 20 an einem Endgerät 22. Das System 18 umfasst einen Kommunikationsadapter 10 sowie ein mobiles Eingabegerät 24, das ausgebildet ist, verschlüsselte Anmeldedaten 26 von einem Benutzer 20 zu speichern und an die Empfangseinheit 12 des Kommunikationsadapters 10 auszugeben. Das System 18 umfasst ferner ein Endgerät 22, welches ausgebildet ist, die entschlüsselten Anmeldedaten 28₂ von der Ausgabeeinheit zu empfangen. Ein mobiles Eingabegerät 24 bzw. ein mobiles Endgerät bezeichnet ein Gerät, welches von einem Benutzer 20 zur Eingabe bzw. zum Speichern von verschlüsselten Anmeldedaten 26 genutzt werden kann.

Ein mobiles Eingabegerät 24 kann beispielsweise ein Smartphone, ein Tablet PC oder ein Laptop sein. Mobile Eingabegeräte 24 sind meist persönliche Geräte eines Benutzers. Durch den persönlichen Bezug des Benutzers 20 zu dem mobilen Eingabegerät 24 wird es einem Angreifer oder Betrüger erschwert, Zugriff auf die im mobilen Eingabegerät 24 gespeicherten, verschlüsselten Anmeldedaten 26 zu erlangen. Mobile Eingabegeräte 24 wie beispielsweise Smartphones, werden außerdem von dem Benutzer 20 häufig permanent herumgetragen. Dies bietet einen guten Schutz vor dem Zugriff durch einen Betrüger. Ein Verlust des mobilen Eingabegeräts 24 wird außerdem durch den Benutzer 20 zeitnah bemerkt, wodurch beispielsweise Zugänge zu Anwendungen dauerhaft blockiert werden können. Das "mit-sich-Herumtragen" des mobilen Eingabegeräts 24 hat zusätzlich den Vorteil, dass das mobile Eingabegerät 24 dem Benutzer 20 jederzeit zur Eingabe von verschlüsselten Anmeldedaten 26 an einen Kommunikationsadapter 10 zur Verfügung steht.

Mobile Eingabegerät 24 weisen zusätzlich einen meist genügend großen Speicher auf, um eine Mehrzahl von "Paaren" bestehend aus verschlüsselten Passwörtern und Benutzernamen zu speichern. Die verschlüsselten Passwörter und Benutzernamen können als verschlüsselten Anmeldedaten 26 gespeichert werden. Ferner verfügen mobile Eingabegeräte 24 meist über verschiedene Kommunikationsschnittstellen, mit welchen sie Daten mit anderen Geräten austauschen können.

Gemäß Ausführungsbeispielen wird auf dem mobilen Eingabegerät 24 ein Programmcode (Software) betrieben, welche den Austausch der verschlüsselten Anmeldedaten 26 zwischen dem mobilen Eingabegerät 24 und dem Kommunikationsadapter 10 steuert. Die Software kann zusätzliche Funktionen umfassen, wie Beispielsweise die Verschlüsselung der Anmeldedaten, das Generieren von ersten- und zweiten Passwörtern, das Steuern oder Überwachen der Kommunikation zwischen dem Kommunikationsadapter 10 und dem Endgerät 22 sowie das Speichern der verschlüsselten Anmeldeten 26. Die Software kann beispielsweise als App (Mobile App, Applikation) auf einem Smartphone betrieben werden.

Ausführungsbeispiele des mobilen Eingabegerätes 24 bzw. des mobilen Endgerätes in Kombination mit einem Kommunikationsadapter 10 werden genutzt, um das Problem der Verwaltung und der Eingabe sicherer Passwörter zu lösen. Der Benutzer 20 bzw. Anwender speichert dazu seine Paare aus Benutzernamen und verschlüsselten Passwörtern auf dem mobilen Eingabegerät 24 (mobiles Endgerät) und lässt sie bei Bedarf zur Authentisierung an ein anderes Gerät (Endgerät 22) senden. Wenn der Benutzer 20 (Nutzer) ein Passwort ausgewählt hat, wird dieses weiterhin verschlüsselt an den Kommunikationsadapter 10 gesendet. Damit ist zu keinem Zeitpunkt das Passwort des Benutzers 20 als Klartext auf dem mobilen Eingabegerät 24 (mobilen Endgerät) vorhanden.

Auf dem Kommunikationsadapter 10 kann in einem besonders geschützten Bereich ein langlebiges Geheimnis des Benutzers 20 gespeichert sein. Nur die Kombination aus verschlüsseltem Passwort (verschlüsselte Anmeldedaten 26) und diesem langlebigen Geheimnis (zweites Passwort) macht eine Entschlüsselung möglich. Nach der Entschlüsselung wird das nun in Klartext auf dem Kommunikationsadapter 10 vorliegende Passwort (entschlüsselte Anmeldedaten 28₁) weiterverarbeitet. Dazu werden die Daten (entschlüsselte Anmeldedaten 28₁) durch den Kommunikationsadapter 10 in das Format einer Standardtastatur umgewandelt und danach als entschlüsselte Anmeldedaten 28₂ an das Endgerät 22 gesendet. Das Format für die Übertragung von Tastaturinformationen kann dabei durch den PC System Design Guide (siehe z.B. die Referenz [9]) für IBM-kompatible Geräte vorgeschrieben sein.

Im Folgenden wird in einem Ausführungsbeispiel der Ablauf einer Authentisieren eines Benutzers 20 (Anmeldung) mit dem neuen Verfahren beschrieben:
1. Das Endgerät 22 (Gerät) fordert einen Benutzer (Anwender) auf, sich anzumelden.
2. Der Benutzer 20 (Anwender) wählt in seinem mobilen Eingabegerät 24 (mobiles Endgerät) die passenden (verschlüsselten) Anmeldedaten 26 aus.
3. Der Benutzer 20 (Anwender) steckt seinen Kommunikationsadapter 10 am Endgerät 22 (Gerät) an.
4. Der Kommunikationsadapter 10 gibt sich selbst gegenüber dem Endgerät 22 (Gerät) als Standardtastatur aus.
5. Der Benutzer 20 fordert sein mobiles Eingabegerät 24 (mobiles Endgerät) auf, die verschlüsselten Anmeldedaten 26 zu übertragen.
6. Das mobile Eingabegerät 24 sendet die verschlüsselten Anmeldedaten 26 (Daten) an den Kommunikationsadapter 10.
7. Der Kommunikationsadapter 10 entschlüsselt die Anmeldedaten 28₁ unter Zuhilfenahme des gespeicherten zweiten Passwortes (langlebiges Geheimnisses).
8. Der Kommunikationsadapter 10 wandelt die entschlüsselten Anmeldedaten 28₁ um, damit sie dem Format einer Standardtastatur entsprechen.
9. Der Kommunikationsadapter 10 sendet die umgewandelten entschlüsselten Anmeldedaten 28₂ (Daten) an das Endgerät 22 (Gerät).
10. Die Anmeldung ist abgeschlossen. Der Benutzer 20 (Anwender) entfernt seinen Kommunikationsadapter 10 vom Endgerät 22 (Gerät).

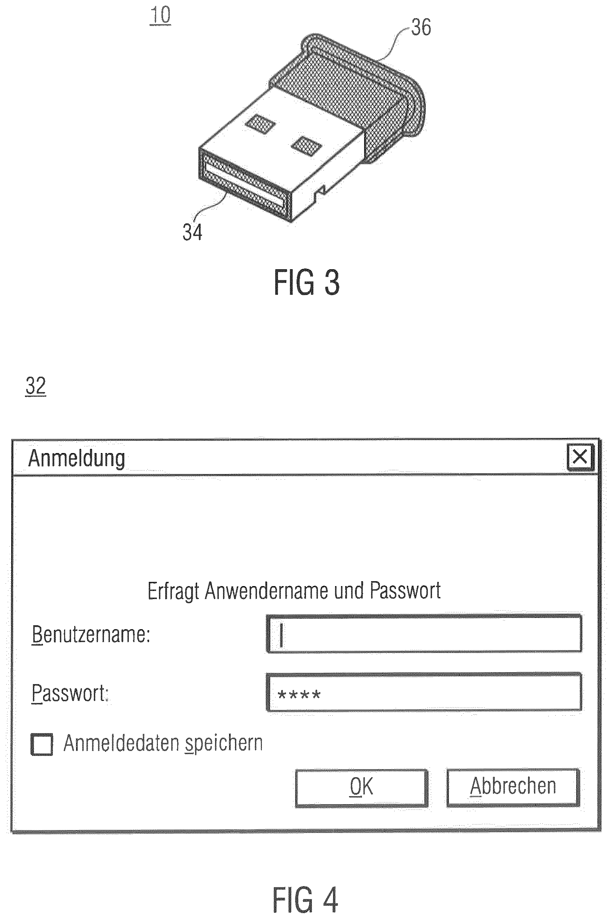

Figur 3 zeigt ein Ausführungsbeispiel eines Kommunikationsadapters 10. Der Kommunikationsadapter 10 umfasst dabei eine USB-Schnittstelle 34, mit welcher der Kommunikationsadapter 10 mit dem Endgerät verbunden werden kann. Der Kommunikationsadapter 10 umfasst ferner eine Empfangseinheit 12, welche beispielsweise durch eine Bluetooth-Schnittstelle 36 ausgebildet ist. Die Bluetooth-Schnittstelle 36 ist vorzugsweise in dem der USB-Schnittstelle 34 gegenüberliegenden Teil des Kommunikationsadapters 10 angeordnet.

Figur 4 zeigt ein Ausführungsbeispiel einer Maske 32 zur Eingabe von Anmeldedaten an einem Endgerät. Die Anmeldedaten können dabei einen Benutzernamen sowie ein Passwort umfassen. Durch den Kommunikationsadapter, welcher eine Tastatureingabe simuliert, kann das mobile Eingabegerät und der Kommunikationsadapter die Eingabemaske 32 automatisiert ausfüllen.

Gemäß Ausführungsbeispielen ist es auch möglich, verschlüsselte Anmeldedaten beispielsweise auf einem Desktop-PC als mobiles Eingabegerät zu speichern und die verschlüsselten Anmeldedaten beispielsweise über eine Bluetooth-Schnittstelle des Desktop-PCs an die Empfangseinheit des Kommunikationsadapters zu senden. Der Kommunikationsadapter entschlüsselt die verschlüsselten Anmeldedaten. Ferner ist der Kommunikationsadapter beispielsweise mit einer USB-Schnittstelle des Desktop-PCs verbunden. Der Kommunikationsadapter gibt die entschlüsselten Anmeldedaten an seiner Ausgabeeinheit an den Desktop-PC als Endgerät zurück. In dem beschriebenen Ausführungsbeispiel ist das mobile Eingabegerät identisch mit dem Endgerät. Der Kommunikationsadapter dient zur Entschlüsselung der verschlüsselten Anmeldedaten, wobei die Entschlüsselung der Anmeldedaten nur mit der entsprechenden Hardware des Kommunikationsadapters für einen Benutzer möglich ist.

Gemäß Ausführungsbeispielen ist in der Hardware des Kommunikationsadapters ein Algorithmus zur Entschlüsselung der verschlüsselten Anmeldedaten enthalten. Durch die Implementierung des Entschlüsselungsalgorithmus direkt in die Hardware des Kommunikationsadapters, kann ein Auslesen des Algorithmus durch Angreifer verhindert werden.

Bei bekannten Verfahren muss der Benutzer seine Daten von Hand auf einer Tastatur eingeben oder er muss auf dem Endgerät selbst eine Software installieren. Dies ist gemäß vorliegenden Ausführungsbeispielen nicht erforderlich. Zur Kommunikation wird ein spezieller Adapter (Kommunikationsadapter) verwendet, der sich gegenüber dem Endgerät (Gerät) wie eine Standardtastatur verhält. Damit sind keine Änderungen am Endgerät (Gerät) erforderlich (z.B. eine Installation von zusätzlichen Treibern oder Software) und eine Kompatibilität mit handelsüblichen PCs ist sichergestellt.

Der Kommunikationsadapter erlaubt es, in Ausführungsbeispielen verschlüsselte Daten von einem mobilen Eingabegerät (mobilen Endgerät) zu empfangen, diese auf dem Kommunikationsadapter (Adapter) selbst zu entschlüsselt und anschließend im Format einer Tastatur weiterzureichen.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block oder ein Bauelement einer Vorrichtung auch als entsprechender Verfahrensschritt oder als Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können unter Verwendung eines Hardware-Apparats, wie zum Beispiel einem Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disk, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Der Datenträger, das digitale Speichermedium oder das aufgezeichnete Medium sind üblicherweise greifbar bzw. nicht-flüchtig.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das dazu konfiguriert ist, ein Computerprogramm zur Durchführung zumindest eines der hierin beschriebenen Verfahren an einen Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms an den Empfänger umfassen.

Bei manchen Ausführungsbeispielen kann ein programmierbares Logikbauelement (beispielsweise ein feldprogrammierbares Gatterarray (ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder eine für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Kommunikationsadapter
- 12: Empfangseinheit
- 14: Entschlüsselungseinheit (Entschlüsselung mit dem langlebigen Geheimnis)
- 16: Ausgabeeinheit
- 18: System eines Kommunikationsadapters
- 20: Benutzer / Anwender, der das Verfahren nutzt
- 22: Endgerät, welches eine Anmeldung erfordert
- 24: Mobiles Eingabegerät (mobiles Endgerät, welches die Paare aus verschlüsselten Passwörtern und Benutzernamen speichert)
- 26: Verschlüsselte Anmeldedaten
- 28₁: Entschlüsselte Anmeldedaten
- 28₂: Entschlüsselte Anmeldedaten im Format einer Tastatur
- 32: Eingabemaske
- 34: USB-Schnittstelle
- 36: Bluetooth-Schnittstelle

### Referenzen:

[1] https://www.bsi.bund.de/DE/Presse/Pressemitteilungen/Presse2011/Passwortsicherheit_27012011.html
[2] 1 Password; https://agilebits.com/onepassword
[3] KeepPass; http://keepass.info/
[4] LastPass; https://lastpass.com/
[5] Passwort Safe 7; http://www.passwordsafe.de/support/ features/ uebersichtversion-7. html
[6] http://mobilevaults.com/mobilevaults-features
[7] http://myidkey.com/using-myidkey/
[8] http://inputstick.com/
[9] Intel Corporation and Microsoft Corporation, PC99 System Design Guide, 1999.

## Patentansprüche

1. Kommunikationsadapter (10) zum Verarbeitung von Anmeldedaten eines Benutzers (20), wobei der Kommunikationsadapter (10) folgende Merkmale umfasst:
eine Empfangseinheit (12) zum Empfangen von verschlüsselten Anmeldedaten (26);
eine Entschlüsselungseinheit (14), zum Entschlüsseln der verschlüsselten Anmeldedaten (26);
eine Ausgabeeinheit (16), zum Ausgeben der entschlüsselten Anmeldedaten (28₁, 28₂) an ein Endgerät (22);
wobei die Ausgabeeinheit (16) mit einer Schnittstelle an dem Endgerät (22) verbunden werden kann und die Schnittstelle an dem Endgerät (22) zur Eingabe von Tastatursignalen geeignet ist;
wobei die Empfangseinheit (12) ausgebildet ist, die verschlüsselten Anmeldedaten (26) von einem mobilen Eingabegerät (24) zu empfangen;
wobei die Empfangseinheit (12) ausgebildet ist, die verschlüsselten Anmeldedaten (26) über eine Funkverbindung von dem mobilen Eingabegerät (24) zu empfangen.

2. Kommunikationsadapter (10) nach Anspruch 1, wobei die Ausgabeeinheit (16) ausgebildet ist, die entschlüsselten Anmeldedaten (28₁, 28₂) in einem Format einer Standardtastatur auszugeben.

3. Kommunikationsadapter (10) nach einem der Ansprüche 1 bis 2, wobei die entschlüsselten Anmeldedaten (28₁, 28₂) ein erstes Passwort umfassen.

4. Kommunikationsadapter (10) nach einem der Ansprüche 1 bis 3, wobei die Entschlüsselungseinheit (14) ausgebildet ist, die verschlüsselten Anmeldedaten (26) mit einem zweiten Passwort zu entschlüsseln.

5. Kommunikationsadapter (10) nach Anspruch 4, wobei der Kommunikationsadapter (10) ausgebildet ist, das zweite Passwort in einem Speicher zu speichern.

6. Kommunikationsadapter (10) nach Anspruch 4 oder 5, wobei das zweite Passwort abhängig ist von einer Anwendung, bei welcher sich der Benutzer (20) authentisiert.

7. Kommunikationsadapter (10) nach einem der Ansprüche 4 bis 6, wobei das zweite Passwort von einem Benutzer (20), welcher sich authentisieren will, abhängig ist.

8. Kommunikationsadapter (10) nach einem der Ansprüche 4 bis 7, wobei der Kommunikationsadapter (10) ausgebildet ist, das zweite Passwort über eine zusätzliche Eingabeeinheit zu empfangen.

9. Kommunikationsadapter (10) nach einem der Ansprüche 4 bis 8, wobei der Kommunikationsadapter (10) ausgebildet ist, das zweite Passwort automatisiert zu generieren.

10. System (18) zum Verarbeitung von Anmeldedaten eines Benutzers (20) an einem Endgerät (22), mit:
einem Kommunikationsadapter (10) nach einem der Ansprüche 1 bis 9;
einem mobilen Eingabegerät, das ausgebildet ist, verschlüsselte Anmeldedaten (26) von einem Benutzer (20) zu speichern und an die Empfangseinheit (12) des Kommunikationsadapters (10) auszugeben; und
ein Endgerät (22), welches ausgebildet ist, die entschlüsselten Anmeldedaten (28₁, 28₂) von der Ausgabeeinheit (16) zu empfangen.

11. System (18) nach Anspruch 10, wobei das mobile Eingabegerät (24) ausgebildet ist, um automatisiert erste Passwörter oder zweite Passwörter zu generieren.

12. Verfahren zum Verarbeitung von Anmeldedaten eines Benutzers (20), wobei das Verfahren umfasst:
Empfangen, von einem Kommunikationsadapter (10), über eine Funkverbindung von verschlüsselten Anmeldedaten (26) von einem mobile Eingabegerät (24)
Entschlüsseln der verschlüsselten Anmeldedaten (26) durch den Kommunikationsadapter (10)
Ausgeben der entschlüsselten Anmeldedaten (28₁, 28₂) an ein Endgerät (22) über eine Schnittstelle an dem Endgerät (22), die zur Eingabe von Tastatursignalen geeignet ist.

13. Computerprogramm mit einem Programmcode zur Durchführung aller Schritte des Verfahrens nach Anspruch 12, wenn das Computerprogramm auf einem Computer oder Prozessor ausgeführt wird.

## Claims

1. Communication adapter (10) for processing credentials of a user (20), the communication adapter (10) comprising:
a receiving unit (12) for receiving encrypted credentials (26);
a decryption unit (14) for decrypting the encrypted credentials (26);
an output unit (16) for outputting the decrypted credentials (28₁, 28₂) to a terminal device (22);
wherein the output unit (16) can be connected to an interface on the terminal device (22) and wherein the interface on the terminal device (22) is suitable for inputting keyboard signals;
wherein the receiving unit (12) is configured to receive the encrypted credentials (26) from a mobile input device (24);
wherein the receiving unit (12) is configured to receive the encrypted credentials (26) from the mobile input device (24) via a radio link.

2. Communication adapter (10) as claimed in claim 1, wherein the output unit (16) is configured to output the decrypted credentials (28₁, 28₂) in a format of a standard keyboard.

3. Communication adapter (10) as claimed in any of claims 1 to 2, wherein the decrypted credentials (28₁, 28₂) include a first password.

4. Communication adapter (10) as claimed in any of claims 1 to 3, wherein the decryption unit (14) is configured to decrypt the encrypted credentials (26) by means of a second password.

5. Communication adapter (10) as claimed in claim 4, the communication adapter (10) being configured to store the second password within a memory.

6. Communication adapter (10) as claimed in claim 4 or 5, wherein the second password is dependent on an application for which the user (20) authenticates himself/herself.

7. Communication adapter (10) as claimed in any of claims 4 to 6, wherein the second password is dependent on a user (20) who wants to authenticate himself/herself.

8. Communication adapter (10) as claimed in any of claims 4 to 7, the communication adapter (10) being configured to receive the second password via an additional input unit.

9. Communication adapter (10) as claimed in any of claims 4 to 8, the communication adapter (10) being configured to generate the second password in an automated manner.

10. System (18) for processing credentials of a user (20) on a terminal device (22), comprising:
a communication adapter (10) as claimed in any of claims 1 to 9;
a mobile input device configured to store encrypted credentials (26) from a user (20) and to output same to the receiving unit (12) of the communication adapter (10); and
a terminal device (22) configured to receive the decrypted credentials (28₁, 28₂) from the output unit (16).

11. System (18) as claimed in claim 10, wherein the mobile input device (24) is configured to generate first passwords or second passwords in an automated manner.

12. Method for processing credentials of a user (20), the method comprising:
receiving, from a communication adapter (10), encrypted credentials (26) from a mobile input device (24) via a radio link
decrypting the encrypted credentials (26) by the communication adapter (10)
outputting the decrypted credentials (28₁, 28₂) to a terminal device (22) via an interface, suited for inputting keyboard signals, on the terminal device (22).

13. Computer program comprising a program code for performing all of the steps of the method as claimed in claim 12, when the computer program is executed on a computer or processor.

## Revendications

1. Adaptateur de communication (10) pour traiter les données de connexion d'un utilisateur (20), dans lequel l'adaptateur de communication (10) comporte:
une unité de réception (12) destinée à recevoir les données de connexion cryptées (26);
une unité de décryptage (14) destinée à décrypter les données de connexion cryptées (26);
une unité de sortie (16) destinée à sortir les données de connexion décryptées (28₁, 28₂) vers un terminal (22);
dans lequel l'unité de sortie (16) peut être connectée à une interface sur le terminal (22) et l'interface sur le terminal (22) convient pour entrer les signaux de clavier;
dans lequel l'unité de réception (12) est conçue pour recevoir les données de connexion cryptées (26) d'un dispositif d'entrée mobile (24);
dans lequel l'unité de réception (12) est conçue pour recevoir les données de connexion cryptées (26) par une connexion radio du dispositif d'entrée mobile (24).

2. Adaptateur de communication (10) selon la revendication 1, dans lequel l'unité de sortie (16) est conçue pour sortir les données de connexion décryptées (28₁, 28₂) dans un format d'un clavier standard.

3. Adaptateur de communication (10) selon l'une des revendications 1 à 2, dans lequel les données de connexion décryptées (28₁, 28₂) comportent un premier mot de passe.

4. Adaptateur de communication (10) selon l'une des revendications 1 à 3, dans lequel l'unité de décryptage (14) est conçue pour décrypter les données de connexion cryptées (26) par un deuxième mot de passe.

5. Adaptateur de communication (10) selon la revendication 4, dans lequel l'adaptateur de communication (10) est conçu pour mémoriser le deuxième mot de passe dans une mémoire.

6. Adaptateur de communication (10) selon la revendication 4 ou 5, dans lequel le deuxième mot de passe dépend d'une application dans laquelle l'utilisateur (20) s'authentifie.

7. Adaptateur de communication (10) selon l'une des revendications 4 à 6, dans lequel le deuxième mot de passe dépend d'un utilisateur (20) qui désire s'authentifier.

8. Adaptateur de communication (10) selon l'une des revendications 4 à 7, dans lequel l'adaptateur de communication (10) est conçu pour recevoir le deuxième mot de passe par l'intermédiaire d'une unité d'entrée supplémentaire.

9. Adaptateur de communication (10) selon l'une des revendications 4 à 8, dans lequel l'adaptateur de communication (10) est conçu pour générer le deuxième mot de passe de manière automatique.

10. Système (18) pour traiter les données de connexion d'un utilisateur (20) sur un terminal (22), avec:
un adaptateur de communication (10) selon l'une des revendications 1 à 9;
un dispositif d'entrée mobile qui est conçu pour mémoriser les données de connexion cryptées (26) d'un utilisateur (20) et pour les sortir vers l'unité de réception (12) de l'adaptateur de communication (10); et
un terminal (22) qui est conçu pour recevoir les données de connexion décryptées (28₁, 28₂) de l'unité de sortie (16).

11. Système (18) selon la revendication 10, dans lequel le dispositif d'entrée mobile (24) est conçu pour générer de manière automatique des premiers mots de passe ou des deuxièmes mots de passe.

12. Procédé pour traiter les données de connexion d'un utilisateur (20), le procédé comprenant le fait de:
recevoir d'un adaptateur de communication (10), par l'intermédiaire d'une connexion radio, les données de connexion cryptées (26) d'un dispositif d'entrée mobile (24),
décrypter les données de connexion cryptées (26) par l'adaptateur de communication (10),
sortir les données de connexion décryptées (28i, 28₂) vers un terminal (22) par l'intermédiaire d'une interface sur le terminal (22) qui convient pour l'entrée de signaux de clavier.

13. Programme d'ordinateur avec un code de programme pour réaliser toutes les étapes du procédé selon la revendication 12 lorsque le programme d'ordinateur est exécuté sur un ordinateur ou un processeur.
